Europäisches Patentamt

European Patent Office

Office européen des brevets

(19)

(11) Veröffentlichungsnummer : **0 327 923 B1**

# (12) EUROPÄISCHE PATENTSCHRIFT

(45) Veröffentlichungstag der Patentschrift :
**03.07.91 Patentblatt 91/27**

(51) Int. Cl.$^5$ : **C09C 1/24**, C09D 5/00,
C08K 3/22, C04B 14/30,
G03G 9/08

(21) Anmeldenummer : **89101609.9**

(22) Anmeldetag : **31.01.89**

(54) **Neue oxidationsstabile hitzebeständige Eisenoxidschwarzpigmente, Verfahren zu ihrer Herstellung sowie deren Verwendung.**

(30) Priorität : **10.02.88 DE 3803940**

(43) Veröffentlichungstag der Anmeldung :
**16.08.89 Patentblatt 89/33**

(45) Bekanntmachung des Hinweises auf die
Patenterteilung :
**03.07.91 Patentblatt 91/27**

(84) Benannte Vertragsstaaten :
**DE FR GB IT**

(56) Entgegenhaltungen :
**EP-A- 0 290 908**

(73) Patentinhaber : **BAYER AG**
**W-5090 Leverkusen 1 Bayerwerk (DE)**

(72) Erfinder : Burow, Wilfried, Dr.
**Glindholzstrasse 100**
**W-4150 Krefeld (DE)**
Erfinder : Schulten, Gerd-Hermann
**Bromberger Strasse 26**
**W-4100 Duisburg 46 (DE)**
Erfinder : Kiemle, Peter, Dr.
**Bärenstrasse 53a**
**W-4150 Krefeld (DE)**

## Beschreibung

Die vorliegende Erfindung betrifft neue isometrische hitzebeständige Eisenoxidschwarzpigmente, Verfahren zu ihrer Herstellung sowie deren Verwendung.

Angesichts des stetig wachsenden Bedarfes an umweltverträglichen Pigmenten gewinnen Eisenoxidpigmente zunehmend an Bedeutung. Als umweltverträgliche Pigmente sollen diese Eisenoxidpigmente möglichst spurenarm sein.

Eisenoxidschwarzpigmente, die in der Lack-, Kunststoff- oder Bauindustrie eingesetzt werden oder als Magnetpigmente Anwendung finden, können in Gegenwart von Sauerstoff oder Luft oxidieren.

Als Folge der Oxidation erleiden sie eine Farbtonverschiebung zu unerwünschten Braun- oder Rottönen. Bei Magnetpigmenten kommt es infolge der Oxidation zu einer Veränderung der magnetischen Eigenschaften.

Insbesondere für den Einsatz von Eisenoxidschwarzpigmenten in Einbrennlacken wird eine hohe Hitzestabilität der Pigmente verlangt.

Aus der DE-A-2 740 861 ist es bekannt, die Hitzestabilität von Eisenoxidschwarzpigmenten durch eine Oberflächenbeschichtung mit bis zu 20 Gew.-% an Metallphosphaten der Metalle Al, Ba, Ca, Mg oder Zn zu erzielen.

Solche Maßnahmen verbieten sich jedoch dort, wo die Farbstärke oder die Magnetdaten des Pigmentes durch die farblose bzw. nichtmagnetische Beschichtung beeinträchtigt werden, oder wo möglichst reine, beschichtungsfreie Eisenoxidschwarzpigmente gefordert werden.

Aufgabe der vorliegenden Erfindung ist es, Eisenoxidschwarzpigmente zur Verfügung zu stellen, die die beschriebenen Nachteile nicht aufweisen.

Es wurde nun gefunden, daß diese Forderung erfüllt wird durch isometrische oxidationsstabile hitzebeständige Eisenoxidschwarzpigmente, die dadurch gekennzeichnet sind, daß sie einen Fremdmetallgehalt an As, Pb, und Ba von jeweils kleiner als 5 ppm aufweisen. Diese Pigmente sind Gegenstand dieser Erfindung. In einer bevorzugten Ausführungsform weisen die erfindungsgemäßen Eisenoxid schwarzpigmente einen Fremdmetallgehalt an Cu, $BaSO_4$, Zn, Sb und Cr von insgesamt kleiner als 200 ppm auf. Diese Eisenoxidschwarzpigmente sind sowohl hitzestabil als auch fremdmetallarm. Sie weisen lediglich einen geringen Gehalt an B, Al, Ga, Si, Ge und Sn in Mengen von 0,05 bis 2, bevorzugt 0,1 bis 1, Gew.-%, berechnet als 3- oder 4-wertige Oxide, auf. In einer bevorzugten Ausführungsform sind die erfindungsgemäßen Eisenoxidschwarzpigmente oberhalb 150°C bis 210°C hitzebeständig.

Die erfindungsgemäßen Eisenoxidschwarzpigmente weisen eine Koerzitivkraft von < 9500 A/m, bevorzugt < 4800 A/m, auf. Sie sind somit neuartige isometrische Eisenoxidschwarzpigmente, die bei äußerster Spurenarmut, eine sehr gute Hitze- und Oxidationsbeständigkeit aufweisen, aber auch als Magnetpigmente für bestimmte Anwendungszwecke besonders geeignet sind.

Allgemein sind die Verfahren zur Herstellung isometrischer Eisenoxidschwarz- oder Magnetpigmente bekannt; nämlich das Einstufen-, das Zweistufenverfahren (Winnacker-Küchler, Band 2, S. 171, München 1970) sowie das Eisen-(III)-chloridverfahren (JP-A-56-60789).

Ein einfacher, wirtschaftlicher Weg zur Produktion beschichtungsfreier, fremdmetallarmer Eisenoxidschwarz- und Magnetpigmente wurde bislang nicht gefunden.

Überraschenderweise kann man durch Umsetzung hochverzweigter, nadelförmiger Eisenoxidgelbpigmente mit Eisen(II)-salzlösung die erfindungsgemäßen neuartigen isometrischen Eisenoxidschwarz- und Magnetpigmente erhalten die sich anhand ihrer Hitzebeständigkeit und Spurenarmut von herkömmlichen isometrischen Eisenoxidschwarz- und Magnetpigmenten unterscheiden und außerdem günstige koloristische oder magnetische Eigenschaften haben.

Gegenstand dieser Erfindung ist auch ein technisch einfaches und zugleich wirtschaftliches Verfahren zur Herstellung der erfindungsgemäßen isometrischen Eisenoxidschwarzpigmente.

Eine Ausführungsform des erfindungsgemäßen Verfahrens ist dadurch gekennzeichnet, daß eine α-FeOOH-Keimbildung durch Fällung von Eisen(II)salzen mit alkalischen Substanzen und Oxidation in Gegenwart von Verbindungen der Elemente B, Al, Ga, Si, Ge und/oder Sn in Mengen von 0,05 bis 10 Gew.-%, berechnet als 3- oder 4-wertige Oxide und bezogen auf den rechnerisch ausgefällten α-FeOOH-Keim, vorgenommen wird, der Pigmentbildungsprozeß durch Auffällen in üblicher Weise erfolgt, von dem dabei entstehenden Gelbschlamm die Salzlauge abgetrennt und die isolierte Eisenoxidgelbpaste durch Fällen mit Eisen-(II)-salzen, Trocknen und Mahlen zum Eisenoxidschwarzpigment umgesetzt wird.

Zur Herstellung der erfindungsgemäßen Pigmente werden bevorzugt Eisenoxidgelbpasten eingesetzt wie sie in der DE-A-3 326 632 beschrieben sind. Die Gelbvorprodukte können aber auch nach den üblichen Eisenoxidgelbproduktionsverfahren hergestellt werden. Bevorzugt wird ein Gelbkeim in Gegenwart geringer Mengen von Al-Verbindungen erzeugt. Auf diesen Keim läßt man ein Gelbpigment aufwachsen.

Eine bevorzugte Ausführungsform des erfindungsgemäßen Verfahrens besteht somit darin, daß bei der

2

Keimbildung bevorzugt Aluminiumverbindungen in solchen Mengen zugesetzt werden, daß der Aluminiumoxidgehalt im Eisenoxidschwarzpigment 0,05 bis 2, bevorzugt 0,1 bis 1,0 Gew.-% beträgt.

Die Eisenoxidgelbsynthese erfolgt nach Penniman in Gegenwart von metallischem Eisen oder dem Fällverfahren oder Anilinverfahren. Beim Fällverfahren geht man von durch Vorfällung gereinigtem Eisen-(II)-sulfat als Rohstoff aus. Bei dem Eisen-(II)-sulfat handelt es sich bevorzugt um Abfallauge, wie sie in Stahlbeizereien und Titandioxidfabriken anfällt. Die Eisenoxidgelbsynthese kann beim Fällverfahren bei konstantem pH-Wert im Bereich 2,8 bis 4,5 oder unter stufenweiser Erhöhung des pH-Wertes während der Pigmentbildung mit Startwerten < 3 um 0,1 bis 0,2 Einheiten/Stunde auf Endwerte von 3,8 bis 4,5 erfolgen.

Nach Beendigung der Gelbsynthese erhält man als Vorprodukt zur Herstellung der isometrischen Eisenoxidschwarz- und Magnetpigmente salzhaltige Gelbschlämme, die nach einem besonders einfachen, wirtschaftlichen Verfahren zu den erfindungsgemäßen Pigmenten weiterverarbeitet werden können.

Zunächst wird aus dem Fertigschlamm, der ca. 30 bis 70 g/l Eisenoxidgelb und eine Salzlauge enthält, die Salzlauge abgetrennt und der Gelbschlamm aufkonzentriert. Die Abtrennung der Salzlauge kann vom hochverzweigten, nadelförmigen Vorprodukt bevorzugt durch Sedimentation erfolgen, weil das hochverzweigte Eisenoxidgelbpigment mehr als 20 mal schneller sedimentiert als übliches Eisenoxidgelb wie z.B. Bayferrox® 920, Handelsprodukt der Bayer AG. Nach drei Stunden Sedimentation kann man die überstehende salzhaltige Lauge abpumpen. Im Sedimentationsbehälter bleibt eine salzarme Gelbpaste zurück, die durch Sedimentation auf mehr als 200 g/l Eisenoxidgelb eingedickt wird.

Dieser Gelbschlamm mit einem Gehalt von z.B. 250 g/l ist im Gegensatz zu gleich konzentrierten Gelbpasten herkömmlicher Eisenoxidgelbpigmente erheblich besser fließ- und pumpfähig. Herkömmliche Gelbschlämme sind nur bis zu einem Gehalt von ca. 100 g/l handhabbar. Bei hohen Konzentrationen steigt die Viskosität herkömmlicher Gelbpasten so sehr an, daß sie nur schwer fließ- und pumpfähig sind und bei der nachfolgenden Umsetzung mit Eisen-(II)-salzen nur langsam und unvollständig reagieren.

Eine besonders wirtschaftliche Variante des erfindungsgemäßen Verfahrens besteht darin, zur Fällung des Gelbschlammes mit Eisen-(II)-salzen leicht fließ- und pumpfähige Gelbschlämme mit einer Konzentration von mehr als 200, bevorzugt > 250 g/l Eisenoxidgelb zu verwenden.

Wegen der sehr hohen Konzentration des Gelbvorproduktes erhält man bei der Umsetzung im Reaktionsbehälter pro Zeiteinheit die 2 bis 2,5 fache Menge an Pigment als bei der herkömmlicher Arbeitsweise nach dem Einstufen-, Zweistufen- oder Eisen-(III)-chloridverfahren.

Dieses Gelbvorprodukt kann dann weiter zum isometrischen Eisenoxidschwarzpigment umgesetzt werden. Wird die Reaktion mit herkömmlichem Eisenoxidgelb als Vorprodukt durchgeführt, entfällt der Vorteil der hohen Pigmentausbeute. Das Reaktionsprodukt, der salzhaltige Schwarzschlamm wird in technisch üblicher Weise salzfrei gewaschen, getrocknet und gemahlen, wobei der Fachmann zur Weiterverarbeitung der Schwarzschlämme aus einer Vielzahl von Aggregaten zum Waschen, Filtrieren, Trocknen und Mahlen des Eisenoxidschwarzpigmentes auswählen kann.

Aufgrund ihrer günstigen Eigenschaften, nämlich Reinheit, Oxidationsbeständigkeit, Hitzestabilität sowie hohe Farbstärke, Blaustich eignen sich die erfindungsgemäßen Eisenoxidschwarzpigmente sehr gut als umweltverträgliche Pigmente zur Einfärbung von Lacken, thermoplastischen Kunststoffen, Baustoffen, insbesondere auch für die Verwendung bei Einbrennlacken.

Weiterhin eignen sich die erfindungsgemäßen Pigmente aufgrund ihrer Reinheit als umweltverträgliche, niederkoerzitive Magnetpigmente (Tab. 6). Gegenstand der Erfindung ist somit auch die Verwendung der Pigmente als niederkoerzitive umweltfreundliche Eisenoxidschwarzpigmente in Tonern.

Nachfolgend wird die Erfindung beispielhaft beschrieben, wobei hierbei keine Einschränkung auf die Beispiele zu sehen ist.

Die Hitzebeständigkeit der erfindungsgemäßen Pigmente wird im folgenden ermittelt, indem man das Pigment im Umlufttrockenschrank einer Hitzebehandlung unterzieht. Die Probenmenge im Porzellantiegel soll 25 g betragen, die Verweilzeit bei der Prüftemperatur 30 Minuten. Als niedrigste Prüftemperatur wird 140°C gewählt und die Prüftemperatur in Intervallen von 20°C gesteigert. Es wird die Temperatur ermittelt, bei der das zu prüfende Pigment erstmals einen deutlichen Farbumschlag erfährt. Es wird die bei 105°C getrocknete Probe als Bezug gewählt. Die Farbtöne aller wärmebehandelten Proben werden im Bindemittel Alkydal F48, Handelsprodukt der Bayer AG, einem mittelöligen Alkydalharz, bei einer Pigmentvolumenkonzentration von 10% gemäß DIN 6174 (äquivalent ISO/DIN 7724, 1-3 drafts) ermittelt. Da ein Farbumschlag des Pigmentes unerwünscht ist, berechnet man gemäß DIN 6174 die Farbabstände $\wedge b^*$ der Pigmentproben gegen den Bezug. Die auf 5°C gerundete Prüftemperatur, bei der sich für das Pigment ein Farbabstand $\wedge b^* = 1$ zum Bezug ergibt, gibt die Hitzebeständigkeit des Pigmentes an. Ein positiver Betrag an $\wedge b^*$ gegenüber dem Bezug entspricht einer unerwünschten Verbräunung des Pigmentes.

Tab. 7 enthält die durch graphische Interpolation ermittelten Temperaturen in °C, bei denen der Farbabstand $\wedge b^* = 1$ beträgt. Die erfindungsgemäß hergestellten Eisenoxidschwarzpigmente zeichnen sich durch besonders günstige Farbeigenschaften aus. Gewünscht sind hohe Farbstärke und hoher Blaustich (negatives $\wedge b^*$) gegenüber dem Bezug. Die Farbwerte der Pigmente wurden im Lack Alkydal® F48 (Handelsprodukt der Bayer AG) im Verschnitt mit Titandioxid R KB2® (Handelsprodukt der Bayer AG) im Gewichtverhältnis 90 : 10 von $TiO_2$ zu $Fe_3O_4$ bei einer Pigmentvolumenkonzentration von 10 % gemäß DIN 6174 (äquivalent ISO/DIN 7724, 1-3 drafts) CIELAB C/2 grd ermittelt.

Tab. 8 enthält die Spurengehalte von Eisenoxidschwarzpigmenten, die in ppm bezogen auf Gewicht angegeben werden.

## Beispiel 1

20,0 m³ Bayferrox® – 920 Z – Suspension (c = 91,6 g FeOOH/l) und 1426 l NaOH-Lösung (c = 18,8 M/l) wurden unter Rühren auf 75°C geheizt und unter weiterem Rühren 8650 l $FeSO_4$-Lösung (c = 235,2 g $FeSO_4$/l) in 2 Stunden zugepumpt, anschließend die Temperatur auf 95°C gesteigert und unter Rühren 2 Stunden bei 95°C und einem pH-Wert = 7,3 ± 0,5 gehalten. Die Pigmentsuspension wurde salzfrei gewaschen, filtriert, der Filterkuchen bis zur Massenkonstanz getrocknet und die Trockensubstanz gemahlen.

## Beispiel 2

1071 ml Bayferrox® – 920 Z – Suspension (c = 83,1 g FeOOH/l) wurden auf 95°C geheizt und mit 412 ml $FeSO_4$-Lösung (c = 240 g/l) versetzt. Bei 95°C wurden in 20 Minuten unter Rühren 279 ml NaOH-Lösung (c = 4,75 M/l) zudosiert und anschließend die Suspension unter Rühren noch 2 Stunden bei 95°C gehalten.

Nach der Waschung auf Salzfreiheit wurde das Pigment abfiltriert, getrocknet und gemahlen.

In der Tabelle 1 sind die Farbstärken (F rel.) und die Farbtondaten ($\wedge b^*$) in der Aufhellung im Vergleich mit Bayferrox®-Pigmenten und die spezifischen Oberflächen (nach BET) der Pigmente aufgeführt.

## Tabelle 1

| Beispiel | Bezug Bayferrox® | Koloristik | | | BET-Oberfl. $[m^2 \ g^{-1}]$ |
|----------|------------------|------------|--------|--------|------------------------------|
|          |                  | F rel      | $\wedge a^*$ | $\wedge b^*$ |                        |
| 1        | 320              | 66 %       | -0,9   | -2,2   | 4,2                          |
| 2        | 320              | 153 %      | -0,5   | -1,3   | 8,0                          |

## Beispiele 3-7

62,0 m³ techn. $FeSO_4$-Lösung (c = 201,0 g $FeSO_4$/l) und 2215 l $Al_2(SO_4)_3$-Lösung (c = 1,00 M/l) wurden unter Rühren auf 50°C geheizt. Nach dem Aufheizen wurden 9,40 m³ techn. Natronlauge (c = 9,50 M/l) zugepumpt und bei 50-55°C solange unter Rühren mit 700 m³ (Luft/h oxidiert, bis der pH-Wert = 2,8 beträgt.

Zu 36,0 m³ dieser Gelbkeimsuspension wurden 80 m³ Wasser hinzugefügt und dann bei 75-80°C unter Rühren und Begasung mit 700 m³ Luft/h in ca. 44 Stunden 70,6 m³ Natronlauge (c = 5,00 M/l und 117 m³ $FeSO_4$-Lösung (c = 201,0 g $FeSO_4$/l so zudosiert, daß der pH-Wert in der Suspension um 0,1-0,2 Einheiten pro Stunde bis pH = 3,8 steigt, dann konstant 4,0 ± 0,2 beträgt.

Die Gelbkeimsuspension wurde salzfrei gewaschen und durch Sedimentation eingedickt.

4530 ml Gelbkeimsuspension (c = 265 g Pigment/l) wurden auf x°C gebracht, mit 3300 ml NaOH-Lösung (c = 4,75 M/l) versetzt und unter Rühren bei x°C $FeSO_4$-Lösung (c = 240 g/l) in ca. y Minuten bis zu einem pH-Wert von 7,3 ± 0,5 mit einer Dosierpumpe zugeführt.

Die Suspension wurde unter Einhaltung des pH-Wertes von 7,3 ± 0,5 auf 95°C geheizt und einige Zeit bei dieser Temperatur und pH = 7,3 ± 0,5 nachgerührt. Das entstandene Eisenoxidschwarzpigment wurde salzfrei gewaschen, filtriert, getrocknet und gemahlen.

In der Tabelle 2 sind die Fällungstemperaturen (x°C), die $FeSO_4$-Dosierzeit (y min), die spezifischen Oberflächen (nach BET) und die Farbdaten (relative Farbstärke F rel, $\wedge a^*$ und $\wedge b^*$) in der Aufhellung im Vergleich mit Bayferrox®-Pigmenten zusammengestellt.

4

## Tabelle 2

| Beispiel | Fälltemp. $x^\circ C$ | Dosierzeit y min | BET $[m^2 g^1]$ | Bezug Bayferrox® | Koloristik | | |
|---|---|---|---|---|---|---|---|
| | | | | | F rel | ⌢ a* | ⌢ b* |
| 3 | 90 | 350 | 2,6 | 320 | 33% | -1,1 | -1,8 |
| 4 | 90 | 90 | 4,4 | 320 | 66% | -0,9 | -1,9 |
| 5 | 90 | 45 | 6,8 | 320 | 90% | -1,1 | -2,3 |
| 6 | 25 | 45 | 5,5 | 320 | 120% | -1,0 | -2,0 |
| 7 | 60 | 45 | 5,8 | 320 | 92% | -1,1 | -1,8 |

EP 0 327 923 B1

Beispiele 8-11

Zu 4530 ml der Gelbpigmentsuspension (c = 265 g Pigment/l) aus den Beispielen 3-7 wurden bei einer Temperatur von x°C gleichzeitig mit 2 Dosierpumpen bei einer Förderleistung von je 12l/h

1.) 3740 ml NaOH-Lösung (c = 4,75 M/l) und

2.) FeSO$_4$-Lösung bis zu einem pH-Wert von y zudosiert.

Die Temperatur der Suspension wurde nun auf 95°C gesteigert und bei dieser Temperatur unter Einhaltung des pH-Wertes y noch 2 Stunden nachgerührt. Die Aufarbeitung der Pigmente erfolgte in üblicher Weise.

Die Fällungstemperatur x°C, der pH-Wert y, die spezifische Oberfläche (BET) und die Farbdaten der Aufhellung im Vergleich mit Bayferrox® 320 sind in der Tabelle 3 aufgeführt.

## Tabelle 3

| Beispiel | Fälltemp. $x^0$ C | pH-Wert y | BET $[m^2 g^{-1}]$ | Bezug Bayferrox® | Koloristik | | |
|---|---|---|---|---|---|---|---|
| | | | | | F rel | $\frown$ a* | $\frown$ b* |
| 8 | 25 | 9,0 ± 0,5 | 6,9 | 320 | 172% | -0,5 | -1,0 |
| 9 | 25 | 10,0 ± 0,5 | 6,2 | 320 | 157% | -0,6 | -1,8 |
| 10 | 60 | 9,0 ± 0,5 | 6,4 | 320 | 151% | -0,7 | -2,0 |
| 11 | 60 | 10,0 ± 0,5 | 4,0 | 320 | 92% | -1,0 | -2,7 |

Beispiele 12-13

Zu 67,0 m³ FeSO₄-Lösung (c = 151,3 g FeSO₄/l) wurden bei 40°C unter Rühren 7400 l Natronlauge (c = 7,82 M/l) und 1310 l Na-aluminat-Lösung (c = 3,0 Mol Al₂O₃ /l und 9,05 Mol NaOH/l zugepumpt und anschließend so lange unter Rühren mit 750 m³ Luft/h oxidiert, bis der pH-Wert ≤ 2,8 beträgt.

60,0 m³ dieser Gelbkeimsuspension wurden mit Wasser auf 120 m³ verdünnt und die Suspension auf 75°C geheizt.

Bei 75-80°C wurden unter Rühren und Begasung mit 700 m³ Luft/h in ca. 48 Stunden 70,0 m³ Natronlauge (c = 7,82 M/l) und 210 m³ FeSO₄-Lösung (c = 201 g FeSO₄/l) so zudosiert, daß der pH-Wert in der Suspension um 0,1-0,2 Einheiten pro Stunde bis pH = 3,8 steigt, dann konstant 4,0 ± 0,2 beträgt.

Die Gelbkeimsuspension wurde salzfrei gewaschen und durch Sedimentation aufkonzentriert.

4445 ml dieser Gelbkeimsuspension (c = 270 g Pigment/l) wurden bei x°C mit 4100 ml NaOH-Lösung (c = 4,75 M/l) versetzt und unter Rühren bei x°C FeSO₄-Lösung (c = 241,7 g/l) mit einer Förderleistung von 12,0 l/h bis pH = 7,0 ± 0,2 zudosiert. Dann wurde die Temperatur auf 95°C gebracht und noch 2 Stunden bei 95°C und pH = 7,0 ± 0,2 nachgerührt.

Die Aufarbeitung der Suspension erfolgte wie bei den vorherigen Beispielen.

Die Fällungstemperatur sowie die spezifischen Oberflächen (nach BET) und die Farbdaten der Aufhellungen der Pigmente im Vergleich mit Bayferrox® 320 sind in der Tabelle 4 enthalten.

## Tabelle 4

| Beispiel | Fälltemp, $x^0$ C | BET $[m^2 g^{-1}]$ | Bezug Bayferrox® | Koloristik | | |
|---|---|---|---|---|---|---|
| | | | | F rel | $\wedge$ a* | $\wedge$ b* |
| 12 | 25 | 8,3 | 320 | 112% | -1,0 | -1,9 |
| 13 | 60 | 8,1 | 320 | 91% | -1,1 | -2,0 |

EP 0 327 923 B1

Beispiele 14-17

4445 ml der Gelbpigmentsuspension aus den Beispielen 12 und 13 (c = 270 g Pigment/l) auf x°C einstellen und unter Rühren bei dieser Temperatur gleichzeitig mit Dosierpumpen mit einer Förderleistung von je 12,0 l/h 3840 ml NaOH-Lösung (c = 4,75 M/l) und FeSO$_4$-Lösung (c = 240,0 g/l) bis zu einem pH-Wert von 7,0 ± 0,2 zudosieren. Nach Steigerung der Temperatur auf 95°C noch 2 Stunden bei dieser Temperatur und pH = 7,2 ± 0,2 nachrühren. Die Suspension wurde wie üblich aufgearbeitet.

In der Tabelle 5 sind die Fälltemperaturen x°C, die spezifischen Oberflächen (nach BET) und die Farbdaten der Aufhellung der Pigmente im Vergleich mit Bayferrox® 320 aufgeführt.

Tabelle 5

| Beispiel | Fälltemp. x°C | BET [m² g⁻¹] | Bezug Bayferrox® | Koloristik | | |
|---|---|---|---|---|---|---|
| | | | | F rel | ∧a* | ∧b* |
| 14 | 25 | 11,0 | 320 | 198% | -0,2 | -0,1 |
| 15 | 60 | 8,4 | 320 | 154% | -0,7 | -1,8 |
| 16 | 80 | 5,8 | 320 | 134% | -0,8 | -2,2 |
| 17 | 90 | 5,6 | 320 | 132% | -0,8 | -2,0 |

## Tabelle 6

Koerzitivkräfte $_IH_C$ [A/m] und Sättigung [Tesla m³/g] von erfindungsgemäß hergestellten Eisenoxidschwarzpigmenten (gemessen am Pulver bei den Feldstärken 79,6 KA/m und 278,5 KA/m).

| Bei-spiel | Feldstärke | | | |
|---|---|---|---|---|
| | 79,6 KA/m | | 278,5 KA/m | |
| | $_IH_C$ [A/m] | Tesla m³/g | $_IH_C$ [A/m] | Tesla m³/g |
| 6 | 3900 | 89965 | 4138 | 105504 |
| 8 | 8196 | 87965 | 8435 | 102992 |
| 12 | 2706 | 85451 | 2785 | 101736 |
| 15 | 5650 | 89221 | 5809 | 106760 |
| 17 | 9231 | 81681 | 9470 | 100480 |

## Tabelle 7

Spezifische Oberfläche (nach BET) und Thermostabilität von Bayferrox® 330 und erfindungsgemäß hergestellten Eisenoxidschwarzpigmenten

| Produkt | | BET-Oberfläche $[m^2 g^{-1}]$ | Thermostabilität $[^0 C]$ |
|---|---|---|---|
| Bayferrox® 320 | | 16,0 | 160 |
| Beispiel | 1 | 4,2 | 190 |
| | 4 | 4,4 | 190 |
| | 5 | 6,8 | 200 |
| | 6 | 5,5 | 190 |
| | 12 | 8,3 | 190 |
| | 15 | 8,4 | 190 |

## Tabelle 8

Spurenelementgehalt von Eisenoxidschwarz- und Magnetpigmenten

| Produkt | As | Pb | Ba | Hg | Cu | BaSO$_4$ | Zn | Sb | Cr | Cd | Sn | U | Se | Te | Tl |
|---|---|---|---|---|---|---|---|---|---|---|---|---|---|---|---|
| | | | | | | [ppm] | | | | | | | | | |
| Beisp. 2 | ‹3 | ‹5 | ‹2 | ‹1 | 26 | ‹5 | 71 | ‹1 | 38 | ‹1 | ‹1 | ‹5 | ‹1 | ‹1 | ‹1 |
| Beisp. 15 | ‹1 | ‹5 | ‹2 | ‹1 | 14 | ‹5 | 40 | ‹1 | 25 | ‹1 | ‹1 | ‹5 | ‹1 | ‹1 | ‹1 |

EP 0 327 923 B1

EP 0 327 923 B1

## Ansprüche

1. Isometrische oxidationsstabile, hitzebeständige Eisenoxidschwarzpigmente, dadurch gekennzeichnet, daß sie einen Fremdmetallgehalt an As, Pb und Ba von jeweils kleiner als 5 ppm aufweisen.

2. Eisenoxidschwarzpigmente gemäß Anspruch 1, dadurch gekennzeichnet, daß sie einen Fremdgehalt an Cu, $BaSO_4$, Zn, Sb und Cr von insgesamt kleiner als 200 ppm aufweisen.

3. Eisenoxidschwarzpigmente gemäß einem der Ansprüche 1 oder 2, dadurch gekennzeichnet, daß sie einen Gehalt an B, Al, Ga, Si, Ge und/oder Sn in Mengen von 0,05 bis 2, bevorzugt 0,1 bis 1, Gew.-%, berechnet als 3- oder 4-wertige Oxide, aufweisen.

4. Eisenoxidschwarzpigmente, gemäß einem oder mehrerer der Ansprüche 1 bis 3, dadurch gekennzeichnet, daß sie bei Temperaturen oberhalb 150°C bis 210°C hitzebeständig sind.

5. Eisenoxidschwarzpigmente gemäß einem oder mehrerer der Ansprüche 1 bis 4, dadurch gekennzeichnet, daß sie eine Koerzitivkraft < 9500 A/m, bevorzugt < 4800 A/m, aufweisen.

6. Verfahren zur Herstellung der Eisenoxidschwarzpigmente gemäß einem oder mehrerer der Ansprüche 1 bis 5, dadurch gekennzeichnet, daß eine $\alpha$-FeOOH-Keimbildung durch Fällung von Eisen(II)salzen mit alkalischen Substanzen und Oxidation in Gegenwart von Verbindungen der Elemente B, Al, Ga, Si, Ge und/oder Sn in Mengen von 0,1 bis 10 Gew.-%, berechnet als 3- oder 4-wertige Oxide und bezogen auf den rechnerisch ausgefällten $\alpha$-FeOOH-Keim, vorgenommen wird, der Pigmentbildungsprozeß durch Auffällen in üblicher Weise erfolgt, von dem dabei entstehenden Gelbschlamm die Salzlauge abgetrennt und die isolierte Eisenoxidgelbpaste durch Fällen mit Eisen-(II)-salzen, Trocknen und Mahlen zum Eisenoxidschwarzpigment umgesetzt wird.

7. Verfahren gemäß Anspruch 6, dadurch gekennzeichnet, daß bei der Keimbildung bevorzugt Aluminiumverbindungen in solchen Mengen zugesetzt werden, daß der Aluminiumoxidgehalt im Eisenoxidschwarzpigment 0,05 bis 2, bevorzugt 0,1 bis 1, Gew.-% beträgt.

8. Verfahren gemäß einem der Ansprüche 5 oder 6, dadurch gekennzeichnet, daß die Abtrennung des Gelbschlammes durch Sedimentation erfolgt.

9. Verfahren gemäß einem oder mehrerer der Ansprüche 5 bis 7, dadurch gekennzeichnet, daß die Fällung des Gelbschlammes mit Eisen(II)salzen mit leicht fließ- und pumpfähigen Gelbschlämmen einer Konzentration von mehr als 250 g/l Eisenoxidgelb beschickt werden.

10. Verwendung der Eisenoxidschwarzpigmente gemäß einem oder mehrerer der Ansprüche 1 bis 8 zur Einfärbung von Lacken, thermoplastischen Kunst- oder Baustoffen.

11. Verwendung der Eisenoxidschwarzpigmente gemäß einem oder mehrerer der Ansprüche 1 bis 8 als niederkoerzitive Eisenoxidschwarzpigmente in Tonern.

## Revendications

1. Oxydes de fer pigmentaires noirs isométriques stables à l'oxydation et à la chaleur, caractérisés en ce qu'ils contiennent les métaux étrangers As, Pb et Ba à une teneur inférieure à 5 ppm pour chacun d'entre eux.

2. Oxydes de fer pigmentaires noirs selon la revendication 1, caractérisés en ce qu'ils contiennent Cu, $BaSO_4$, Zn, Sb et Cr à une teneur globale inférieure à 200 ppm.

3. Oxydes de fer pigmentaires noirs selon l'une des revendications 1 ou 2, caractérisés en ce qu'ils contiennent B, Al, Ga, Si, Ge et/ou Sn en quantités de 0,5 à 2, de préférence de 0,1 à 1% en poids, exprimées en oxydes tri- ou tétravalents.

4. Oxydes de fer pigmentaires noirs selon une ou plusieurs des revendications 1 à 3, caractérisés en ce qu'ils sont stables à la chaleur à des températures supérieures à 150°C et allant jusqu'à 210°C.

5. Oxydes de fer pigmentaires noirs selon une ou plusieurs des revendications 1 à 4, caractérisés en ce qu'ils ont une force coercitive inférieure à 9 500 A/m et de préférence inférieure à 4 800 A/m.

6. Procédé de préparation des oxydes de fer pigmentaires noirs selon une ou plusieurs des revendications 1 à 5, caractérisé en ce que l'on procède à une formation de germes d'$\alpha$-FeOOH par précipitation de sels ferreux à l'aide de substances alcalines et oxydation en présence de composés des éléments B, Al, Ba, Si, Ge et/ou Sn en quantités de 0,1 à 10% en poids, exprimées en oxydes tri- ou tétravalents et par rapport aux germes d'$\alpha$-FeOOH précipités, déterminés par le calcul, on procède à la formation du pigment par précipitation de la manière habituelle, on sépare des boues jaunes ainsi obtenues la lessive saline et on convertit la pâte d'oxyde de fer jaune isolée par précipitation avec des sels ferreux, séchage et broyage, en l'oxyde de fer pigmentaire noir.

7. Procédé selon la revendication 6, caractérisé en ce que, à la formation des germes, on ajoute de préférence des composés de l'aluminium en quantité telle que la teneur en alumine de l'oxyde de fer pigmentaire

14

noir soit de 0,05 à 2, de préférence de 0,1 à 1% en poids.

8. Procédé selon l'une des revendications 5 ou 6, caractérisé en ce que la séparation des boues jaunes est faite par sédimentation.

9. Procédé selon une ou plusieurs des revendications 5 à 7, caractérisé en ce que l'on envoie à la précipitation par les sels ferreux des boues jaunes bien fluides et pompables, à une concentration supérieure à 250 g/l d'oxyde de fer jaune.

10. Utilisation des oxydes de fer pigmentaires noirs selon une ou plusieurs des revendications 1 à 8 pour la coloration de peintures, de résines synthétiques thermoplastiques ou de matériaux de construction.

11. Utilisation des oxydes de fer pigmentaires noirs selon une ou plusieurs des revendications 1 à 8 en tant qu'oxydes de fer pigmentaires noirs à basse coercitivité dans des toners.

## Claims

1. Isometric, oxidation-stable, heat-resistant iron oxide black pigments, characterized in that they have a foreign metal content of As, Pb and Ba of less than 5 ppm of each.

2. Iron oxide black pigments as claimed in claim 1, characterized in that they have a foreign content of Cu, $BaSO_4$, Zn, Sb and Cr of, in all, less than 200 ppm.

3. Iron oxide black pigments as claimed in claim 1 or 2, characterized in that they contain B, Al, Ga, Si, Ge and/or Sn in quantities of 0.05 to 2% by weight and preferably 0.1 to 1% by weight, expressed as 3- or 4-valent oxides.

4. Iron oxide black pigments as claimed in one or more of claims 1 to 3, characterized in that they are heat-resistant at temperature above 150°C to 210°C.

5. Iron oxide black pigments as claimed in one or more of claims 1 to 4, characterized in that they have a coercive force of < 9,500 A/m and preferably < 4,800 A/m.

6. A process for the production of the iron oxide black pigments claimed in one or more of claims 1 to 5, characterized in that $\alpha$-FeOOH seeds are formed by precipitation of iron(II) salts with alkaline substances and oxidation in the presence of compounds of the elements B, Al, Ga, Si, Ge and/or Sn in quantities of 0.1 to 10% by weight, expressed as 3- or 4-valent oxides and based on the $\alpha$-FeOOH seeds theoretically precipitated, pigment formation is carried out in the usual way by precipitation, the salt liquor is removed from the yellow sludge formed and the iron oxide yellow paste isolated is reacted by precipitation with iron(II) salts, drying and grinding to the iron oxide black pigment.

7. A process as claimed in claim 6, characterized in that aluminium compounds are preferably added during seed formation in such quantities that the aluminium oxide content in the iron oxide black pigment is 0.05 to 2% by weight and preferably 0.1 to 1% by weight.

8. A process as claimed in claim 5 or 6, characterized in that the yellow sludge is removed by sedimentation.

9. A process as claimed in one or more of claims 5 to 7, characterized in that the precipitation of the yellow sludge with iron(II) salts is charged with readily flowable and pumpable yellow sludges having a concentration of more than 250 g/l iron oxide yellow.

10. The use of the iron oxide black pigments claimed in one or more of claims 1 to 8 for pigmenting paints, thermoplastics or building materials.

11. The use of the iron oxide black pigments claimed in one or more of claims 1 to 8 as low-coercitivity iron oxide black pigments in toners.